# EUROPEAN PATENT SPECIFICATION

(11) **EP 3 998 208 B1**
(45) Date of publication and mention of the grant of the patent: **13.03.2024**
(21) Application number: 21158226.7
(22) Date of filing: 19.02.2021
(51) Int. Cl.: B64C 29/00, B64D 27/24, H01M 50/20, B60L 50/60, B60L 58/21, B60L 58/26, H01M 50/249

(54) **BATTERY AIRCRAFT INTEGRATION**
BATTERIEINTEGRATION IN EINEM FLUGZEUG
INTÉGRATION BATTERIE DANS UN AÉRONEF

(43) Date of publication of application: 18.05.2022
(73) Proprietor: Lilium eAircraft GmbH, 82234 Wessling (DE)
(72) Inventor: PITRE, Ryan, 82234 Wessling (DE); PLAZA, Angel, 82234 Wessling (DE); WEBER, Joerg, 82234 Wessling (DE); DIETRICH, Axel, 82205 Gilching (DE); FRITSCH, Gerd, 82234 Wessling (DE); DUNTHORN, Jason, 82234 Wessling (DE); SCHEILE, Felix, 82234 Wessling (DE); ADER, Armin, 82234 Wessling (DE)
(74) Representative: Weickmann & Weickmann PartmbB

(56) References cited:
- CN-A- 108 688 803
- DE-A1-102020 000 216
- US-A1- 2014 158 816
- US-A1- 2018 273 198

## Description

The present invention relates to an aircraft of the electrical propulsion type, comprising a fuselage, at least one pair of wings and a battery system for providing power to electrical systems of the aircraft, wherein the battery system comprises at least one battery pack, an wherein each battery pack comprises a number of individual battery modules, which are directly or indirectly coupled to one another.

Generally, battery packs are composed of a number of battery modules, which in turn consists of a plurality of battery cells. If battery systems are included in an aircraft, e.g. to provide power, battery packs must contain certain features, in order to protect the battery cells and/or modules from the operating environment and the passengers from battery cells and/or modules in failure scenarios. These features reduce the effective energy density of the system by nature of extra "non-useful mass". However, this extra mass should be reduced.

Traditional aerospace has not used battery systems for propulsive power supply, hence, prior art with respect to this topic is rare. However, WO 2019/232472 A1, which discloses an electric vertical take-off and landing (EVTOL) aircraft, suggests a system of six distributed battery packs, each pack being an enclosed structure with multiple battery modules within each enclosed pack structure. In WO 2019/232472 A1 the battery packs are arranged beneath the passenger compartment / cockpit, but mainly in the wings of the aircraft. Such arrangement leads to the problem of quite thick wings having a relatively large vertical dimension in a wing cross section, which may negatively influence aerodynamics of the aircraft.

In prior art of the distantly related field of automotive battery systems the topic of battery arrangement is typically solved by packaging all battery modules centrally into a common structural enclosure (the term "skateboard" is often used) underneath the vehicle.

However, grouping of battery modules into a pack is a redundant structural strategy, where multiple enclosures lead to higher mass. Moreover, the tight packing of battery modules makes preventing propagation of thermal runaway between modules difficult, requiring additional mass.

Furthermore, from a maintenance point of view, when a single battery module is faulty, replacement would be quite an expensive process, as the battery pack would need to be extracted and opened up, the battery module would need to be replaced, and the battery pack would need to be re-closed and reinstalled. The battery pack itself would be too heavy for an operator to handle, such that special equipment would be required. Additionally, battery arrangement below passengers as well as within wings is disadvantageous in case of battery failure leading to fire, since passengers may be exposed to danger and the locations below the passenger compartment or the cockpit and within the wings are not easy to reach. This fact also entails maintenance disadvantages, e.g. when replacing batteries.

US 2018/0273198 A1 discloses a distributed auxiliary power unit (APU) system for an aircraft comprising a fuselage and at least one pair of wings, wherein the APU system includes one or more battery modules for storing electrical power and a plurality of racks for receiving the one or more battery modules to electrically connect with an electrical subsystem of the aircraft, wherein the racks are located in a nose location, an under-cabin fairing location, etc.

DE 10 2020 000 216 A1 discloses a retrofit kit for a glider, wherein batteries for providing power to electrical systems of the glider and its electric motor can be provided on the fuselage.

CN 10 86 888 03 A discloses an electric vertical takeoff and landing aircraft with a battery system located at a lower portion thereof.

In view of this background, it was an object of the present invention to overcome the problems of the prior art and to provide an aircraft with a battery system as light weight as possible, while also having sufficient safety, performance and maintainability capabilities.

According to the present invention, this object is achieved by an aircraft according to claim 1 of the present invention.

Such arrangement is maintainable because the at least one battery pack is accessible from outside, since only the aircraft outer wall is present between an operator and the at least one battery pack. Therefore, it can easily be exchanged without massive equipment. A better maintainability of the system leads to a lower vehicle down time. In particular, the interior space of the fuselage may be a passenger compartment and/or a luggage compartment and/or a cockpit of the aircraft.

Throughout the entire disclosure of the present invention, a battery cell refers to a smallest packaged form a battery can take. A cell is suitable for storing energy and comprises at least two terminals in form of positive and negative electrodes. A battery module consists of several cells generally connected in either series or parallel in a module structure such as a housing or another enclosure. Typically, a cell stack is enclosed in a housing. A battery pack is assembled by connecting modules together in a pack structure such as a frame or housing and typically constitutes a closed unit or structure.

Preferably, the battery system may comprise at least two battery packs, and, with respect to a longitudinal axis of the aircraft, on either side of the fuselage, at least one of the battery packs may be disposed between the inner structural wall of the fuselage and the outer fairing wall of the fuselage. Arranging battery packs on either side of the fuselage allows for an even distribution, in particular with respect to a center of gravity of the aircraft.

In a beneficial embodiment of the present invention, the battery system may comprise a plurality of battery packs, said plurality of battery packs being divided into two groups of battery packs, and, with respect to a longitudinal axis of the aircraft, on either side of the fuselage, one of the two groups of battery packs may be disposed between the inner structural wall of the fuselage and the outer fairing wall of the fuselage. Such arrangement allows for an even distribution with respect to a center of gravity of the aircraft. Moreover, dividing the battery packs in two groups leads to less system complexity compared to an arrangement underneath a passenger compartment and additionally within the wings of an aircraft. For example, cable length of cables connecting the battery modules and/or battery packs can be reduced, since the battery packs are disposed close to each other in two groups, one on either side of the fuselage, between the inner structural wall and the outer fairing wall of the fuselage. Thus, fewer parts have to be produced leading to lower cost of the overall system.

In a preferred embodiment of the present invention, the fuselage may be provided with a rack mounting mechanism comprising a number of mounting brackets, each for exchangeably mounting one of the battery modules to the aircraft. Typically, battery modules are enclosed in a pack level structure, which is in turn mounted to the aircraft. Such battery packs are quite large and heavy and therefore difficult to handle, when they have to be maintained or exchanged. However, the arrangement according to the preferred embodiment of the present invention is a "quick-replace" solution for individual battery modules. This allows the aircraft to spend more time operating and less time for maintenance. Additionally, the discretization of the system into smaller modules allows for a single operator to handle/install/remove battery modules without specialized lifting equipment. The resulting system is lightweight due to not having nested structures. It is a high performance system due to the cell selection and low weight. It is safe because failures are contained to single modules and do not propagate through the system. It is maintainable because single battery modules can be exchanged without massive equipment. The discretization of the pack into single modules/units also allows for more conformity to the aircraft surface, which allows better utilization of available volume. This reduces the aircraft cross-section, reducing drag and improving performance. Overall, better maintainability of the system leads to lower vehicle down time. The rack mounting mechanism may be any mechanism suitable for exchangeably mounting a battery module to the aircraft. In this context, "exchangeably mounting" means that a battery module can individually be removed from the aircraft and then reinstalled or replaced by another, in particular similar or identical, battery module.

While the fuselage of the aircraft is provided with a rack mounting mechanism enabling an exchangeable mounting of the battery modules to the aircraft, the battery system may further comprise a thermal management system circulating a heat transfer fluid through the battery modules, at least several, preferably all battery modules, may comprise a fluid inlet connector and a fluid outlet connector connected to an internal channel system of the corresponding battery module for heat transfer fluid within the corresponding battery module and adapted to being connected to the the thermal management system, and at least several, preferably all mounting brackets may comprise counterpart connectors for the fluid inlet and outlet of the corresponding battery module, respectively. Hence, the battery system may be automatically connected to the the thermal management system of the aircraft, in particular using quick connections by means of the rack mounting mechanism. Thus, unnecessary structural overhead can be removed by incorporating protective measures such as cooling at the battery module level. This may lead to better thermal runaway safety.

In a further preferred embodiment of the present invention, each of the battery packs is a virtual battery pack, which is obtained by electrically connecting a predetermined number of the battery modules. In other words, the battery modules may not be enclosed in a pack level structure such as a housing etc. Hence, a distributed network of battery packs may be provided, where individual battery packs are not enclosed in a structure but are instead distributed in the aircraft, in particular on both sides. A battery pack may only exist virtually, i.e. by electrically connecting battery modules together. The virtual pack network may remove unnecessary structural overhead by incorporating all protective measures at the battery module level. In addition, protection for failure propagation between modules is easier because they are mechanically separated. The virtual pack network is a "quick-replace" solution, for entire packs as well as for individual battery modules. This allows the aircraft to spend more time operating and less time for maintenance. Additionally, the discretization of the system into smaller modules allows for a single operator to handle/install/remove battery modules without specialized lifting equipment. The discretization of the pack into single units also allows for more conformity to the aircraft surface, which allows better utilization of available volume. This reduces the aircraft cross-section, reducing drag and improving performance. The resulting system is lightweight due to not having nested structures. It is a high performance system due to the cell selection and low weight. It is safe because failures are contained to single modules and do not propagate through the system. It is maintainable because single modules or battery packs can be exchanged without massive equipment.

The battery modules of each of the battery packs may be electrically connected in series, in particular by bus bars facing towards an outside of the aircraft. Such arrangement facilitates maintenance. Moreover, the battery modules may in particular be identical or at least similar. In this case, the modules may be rotated upside down before installing such that all modules can be electrically connected in series with their terminals facing outside on either side of the aircraft. Hence, the system may be less complex, fewer parts have to be used, e.g. the cable length necessary for connecting the modules can drastically be reduced and a lightweight and more cost efficient overall system may be achieved.

In a beneficial embodiment of the present invention, each of the battery modules may be individually secured to the fuselage of the aircraft at a certain mounting position. In particular, a rack mounting mechanism with quick connects may be used.

In this case, the fuselage may be provided with a number of said mounting positions, each for interchangeably holding one of the battery modules, the number of mounting positions being larger than the number of battery modules such that, in a mounted state of all battery modules, at least one of the mounting positions remains vacant.

High-capacity battery assemblies are usually not constructed monolithically, but comprise a number of individual battery modules, which in the configuration of an aircraft according to the present invention may be positioned according to different mounting positions in the mounting assembly located within the fuselage of the aircraft in order to adjust its center of gravity. While it is usually desired to have as large a battery capacity in the aircraft as possible, since in the aircraft according to the present invention the vacant mounting positions and/or the displacement assembly hardly add any additional weight to the aircraft, the benefits of being able to adjust the center of gravity of the aircraft by means of relocating the battery modules and thus where applicable indirectly also the vacant mounting positions within the mounting assembly can be achieved without any major drawbacks and with basically almost the same mass per unit of electrical capacity of the mounting assembly and battery modules combined as compared with a smaller mounting assembly, in which no vacant mounting positions or displacement assemblies are provided.

The aircraft according to the present invention is of the electrical propulsion type. In aircraft of the electrical propulsion type battery mass may be approximately one third of the entire mass of the aircraft. Hence, a lightweight system as provided by the present invention is very advantageously applicable to aircraft of the electrical propulsion type.

In an even more preferred embodiment of the present invention, the aircraft may be an electric vertical take-off and landing aircraft. Since an electric vertical take-off and landing (EVTOL) aircraft is intended to operate as often as possible, the battery packs / modules will age more quickly, and will require replacement more than a typical battery electric vehicle (BEV). Additionally, the safety criticality of a battery module is more severe, as typical BEV does not suffer catastrophic failures if power supply is limited, while an EVTOL aircraft will not be able to land if power is not available due to a failure. Hence, the present invention is very advantageously applicable to EVTOL aircraft.

A preferred embodiment of the present invention will now be described in more detail with respect to the drawings, in which:
- Fig. 1: shows a perspective view of an aircraft according to the preferred embodiment of the present invention,
- Fig. 2: shows a top view of the aircraft of Fig. 1,
- Fig. 3: shows a side view of the aircraft of Fig. 1, and
- Fig. 4: shows a perspective view of a battery module of a battery system comprised by the aircraft according to the preferred embodiment of the present invention.

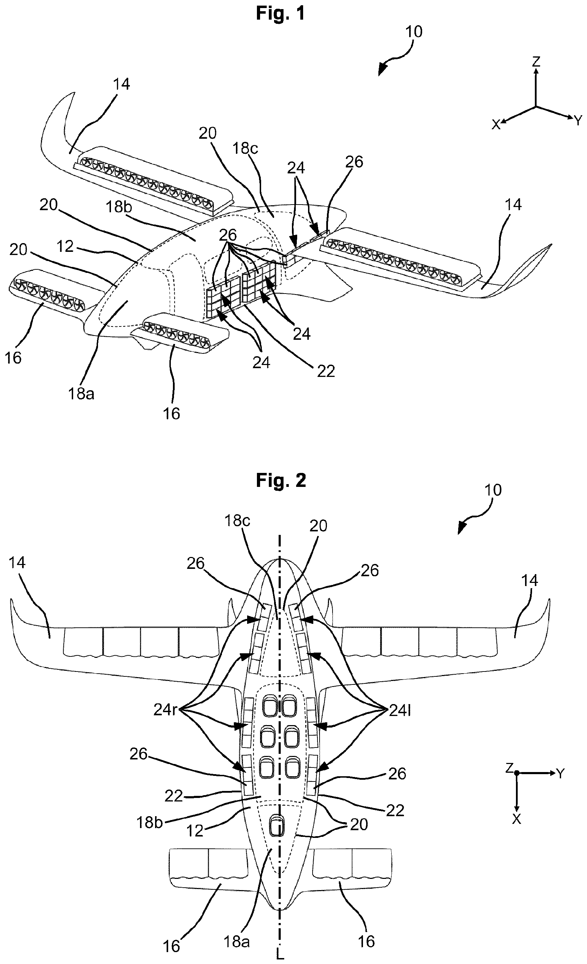

In Fig. 1, the aircraft according to the preferred embodiment of the present invention is generally referred to with reference numeral 10 and comprises a fuselage 12 as well as a first pair of wings 14 and a second pair of wings 16. A plurality of engines may be attached to the wings. The aircraft 10 may further include other components known as such in conventional aircrafts, such as an elevator or landing gears (not shown), for example. An outer fairing wall 22 encloses the fuselage 12 and an interior space 18 is formed inside the fuselage 12 for accommodating at least one person, for example a pilot and/or one or several passengers. In particular, the interior space 18 may be divided into a cockpit 18a, a passenger compartment 18b and a luggage compartment 18c. An inner structural wall 20 in turn encloses the interior space 18.

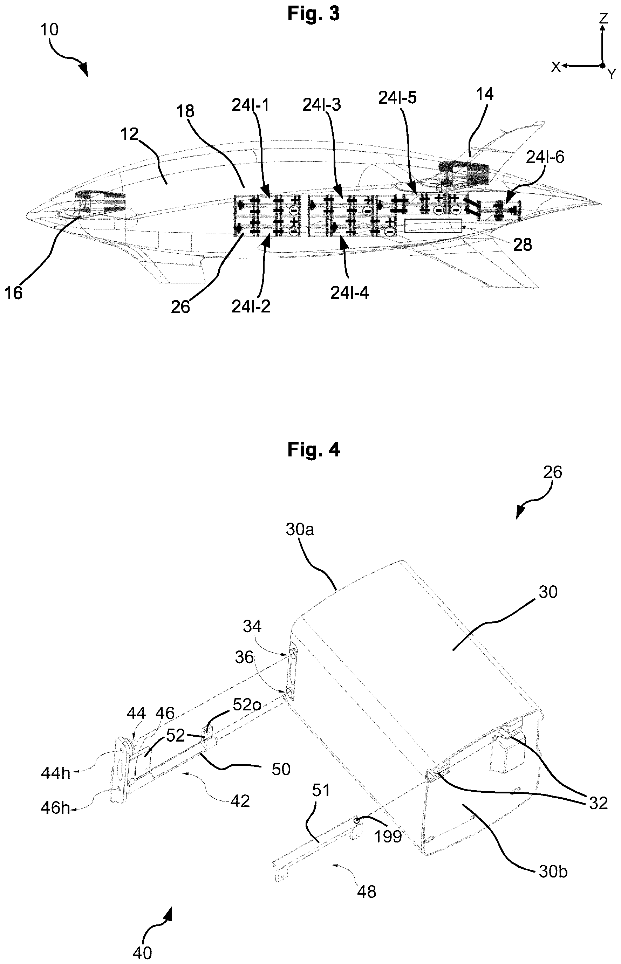

A longitudinal direction of the fuselage 12 defines a heading direction X of the aircraft 10. A span direction or Y direction is oriented orthogonal to the heading direction X and parallel to a wing plane. The vertical axis, which, in case of a VTOL aircraft, is a set direction, is defined orthogonal to the X direction and the Y direction, i.e. orthogonally to the wing plane. The wing plane or XY plane is the drawing plane in Fig. 2. The XZ plane is the drawing plane in Fig. 3.

The aircraft 10 further comprises a battery system for providing power to electrical systems of the aircraft 10. According to the preferred embodiment of the present invention, the aircraft 10 is a vertical take-off and landing aircraft such that the battery system provides electrical power for propulsion of the aircraft 10.

The battery system comprises at least one battery pack 24 and each battery pack 24 comprises a number of individual battery modules 26, which are in particular connected in series (see e.g. Fig. 3).

As better seen in Fig. 2, the battery system comprises a plurality of battery packs 24. In the present invention, battery packs 24 are in particular virtual battery packs 24, which means that a pack only exists by electrically connecting several battery modules 26. Such virtual battery pack 24 does not comprise any housing or pack structure enclosing the single modules 26. The single battery modules 26 in turn are mounted to the aircraft 10 as described later with reference to Fig. 4.

Said plurality of battery packs 24 may be divided into two groups of battery packs 24l, 24r. With respect to a longitudinal axis L of the aircraft 10, parallel to the X direction, on either side of the fuselage 12, one of the two groups of battery packs 24l, 24r is disposed between the inner structural wall 20 of the fuselage 12 and the outer fairing wall 22 of the fuselage 12.

In the preferred embodiment of the present invention, each group 24l, 24r comprises six battery packs 24. First to fourth battery packs 24 are disposed beside the passenger compartment 18b and fifth and sixth battery packs 24 are disposed beside the luggage compartment 18c and preferably below a pair of wings 14 (see Fig. 1 or Fig. 3) in order to ensure easy access from outside for maintenance. In the preferred embodiment of the present invention, the groups 24l, 24r of battery packs 24 are arranged on either side of the fuselage 12 substantially symmetrical with respect to longitudinal axis L. In the illustrated example, the first packs are disposed above the second packs in the Z direction. The first and second packs are disposed forward in the heading or X direction. The third packs are disposed above the fourth packs in the Z direction and the third and fourth packs are disposed further back in the X direction. Adjacent thereto, the fifth and sixth packs are disposed side by side in the X direction, with the sixth packs at a backward position in the X direction. In this example, each virtual battery pack 24 may comprise six battery modules 26 arranged in a 2x3 array.

Fig. 3 is a side view of the aircraft 10, in particular showing arrangement and electrical connection of battery packs 24 and modules 26 of the one (in heading direction left) group 24l of battery packs. As mentioned above, the other (right) group 24r may in particular be symmetrical to group 24l with respect to the longitudinal axis L, with the exception that the battery modules 26 may be mounted upside down such that identical modules can be used having terminals facing outside such that maintenance and/or replacement is easier. In Fig. 3, positive pole pack connectors are indicated by a plus sign, and negative pole pack connectors are indicated by an encircled minus sign. Locations of pyro-fuse and battery management master are indicated by the pyro-fuse symbol. As can be seen, decentralized power distribution units 28 are arranged below the wings 14 and the backward battery packs 24l in Z direction and beside the luggage compartment 18c in Y direction.

Fig. 4 illustrates one of the battery modules 26. The battery module 26 comprises a housing formed from a tube-like enclosure 30, a front end plate 30a and a back end plate 30b, the two end plates closing a front opening and a back opening of the enclosure 30. In the housing, a cell stack may be accommodated.

For cooling and/or heating, an internal channel system can be provided in the battery module 26 within the housing 30. The internal channel system may be connected at both ends to a fluid connector arrangement for connecting the battery module 26 to an external thermal management system. Two fluid lines are embedded into the front plate 30a for connecting the internal channel system to a fluid inlet connector 34 and a fluid outlet connector 36 of the fluid connector arrangement.

As also shown in Fig. 4, in order to position and fix the battery module 26 on the aircraft 10, a guide rail (not shown) for a cylindrical mounting pin 50 of an mounting bracket 42 of the aircraft 10 can be provided the front end plate 30a, e.g. in a lower part thereof, and a similar guide rail 32 for a mounting plate 51 of a further mounting bracket 48 can be provided in the back end plate 30b, e.g. in an upper part thereof.

The mounting brackets 42, 48 can comprise fastening plates 52 with holes 52o through which suitable fasteners can be passed in order to fix each mounting bracket 42, 48 to a corresponding mounting structure (not shown) provided on the air craft fuselage. In order to fix the mounting plate 51 to the back end plate 30b, for example a simple R-pin (not shown) can be inserted through a hole 199 provided in a distal end portion of mounting plate 51 inserted in and protruding beyond the guide rail 32.

The mounting bracket 42 furthermore comprises self-sealing and preferably dripless push-to connect counter-connectors 44, 46 adapted to be coupled with the fluid connectors 34, 36 provided on the battery module 26. Inlets and outlets 44h, 46h lead to the thermal management system of the aircraft 10.

The guide rails and the push-to connect fluid connectors 34, 36 are oriented in parallel to each other so that the battery module 26 can be attached to the aircraft and connected to the thermal management system at the same time by sliding the battery module 26 onto the corresponding mounting brackets along that direction.

As the cylindrical mounting pin 50 is very precise, the connection between the fluid connectors 34, 36 and the corresponding counter-connectors 44, 46 can be correctly performed. Then, all tolerance stack up is compensated by the play between mounting plate 51 and the corresponding guide rail 32 on the back side of the battery module 26. Additionally, the counter-connectors 44, 46 provided on the mounting bracket 42 can have floating capabilities to compensate for tolerances.

Furthermore, the rotational degree of freedom between the cylindrical mounting pin 50 and the corresponding guide rail provided in the front end plate 30a and the play between mounting plate 51 and guide rail 32 serve to isolate the module from the bending modes of the fuselage when subjected to flight loads, in this case, bending and shear deformation of the fuselage structure.

## Claims

1. Aircraft (10) of the electrical propulsion type, comprising a fuselage (12), at least one pair of wings (14, 16) and a battery system for providing power for propulsion and to electrical systems of the aircraft (10), wherein
- the battery system comprises at least one battery pack (24),
- each battery pack (24) comprises a number of individual battery modules (26), which are directly or indirectly coupled to one another, and
- the aircraft comprises an interior space (18) formed inside the fuselage (12) for accommodating at least one person,
**characterized in that**
- the at least one battery pack (24) is disposed between an inner structural wall (20) defining and enclosing the interior space (18) of the fuselage (12) and an outer fairing wall (22) of the fuselage (12), wherein the outer fairing wall (22) encloses the fuselage (12).

2. Aircraft (10) according to claim 1, wherein
the battery system comprises at least two battery packs (24), and wherein,
with respect to a longitudinal axis (L) of the aircraft (10), on either side of the fuselage (12), at least one of the battery packs (24) is disposed between the inner structural wall (20) of the fuselage (12) and the outer fairing wall (22) of the fuselage (12).

3. Aircraft (10) according to claim 1 or claim 2, wherein
the battery system comprises a plurality of battery packs (24), said plurality of battery packs (24) being divided into two groups of battery packs (24l, 24r), and wherein,
with respect to a longitudinal axis (L) of the aircraft (10), on either side of the fuselage (12), one of the two groups of battery packs (24l, 24r) is disposed between the inner structural wall (20) of the fuselage (12) and the outer fairing wall (22) of the fuselage (12).

4. Aircraft (10) according to any of the preceding claims, wherein the fuselage (12) is provided with a rack mounting mechanism (40) comprising a number of mounting brackets (42), each for exchangeably mounting one of the battery modules (26) to the aircraft (10).

5. Aircraft (10) according to claim 4, wherein
- the battery system further comprises a thermal management system circulating a heat transfer fluid through the battery modules (26),
- at least several, preferably all battery modules (26), comprise a fluid inlet connector (34) and a fluid outlet connector (36) connected to an internal channel system of the corresponding battery module (26) for heat transfer fluid within the corresponding battery module (26) and adapted to being connected to the thermal management system, and
- at least several, preferably all mounting brackets (42) comprise counterpart connectors (44, 46) for the fluid inlet and outlet (34, 36) of the corresponding battery module (26), respectively.

6. Aircraft (10) according to any of the preceding claims, wherein each of the battery packs (24) is a virtual battery pack (24), which is obtained by electrically connecting a predetermined number of the battery modules (26).

7. Aircraft (10) according to any of the preceding claims, wherein
the battery modules (26) of each of the battery packs (24) are electrically connected in series, in particular by bus bars facing towards an outside of the aircraft (10).

8. Aircraft (10) according to any of the preceding claims, wherein
each of the battery modules (26) is individually secured to the fuselage (12) of the aircraft (10) at a certain mounting position.

9. Aircraft (10) according to claim 8, wherein
the fuselage (12) is provided with a number of said mounting positions, each for interchangeably holding one of the battery modules (26), the number of mounting positions being larger than the number of battery modules (26) such that, in a mounted state of all battery modules (26), at least one of the mounting positions remains vacant.

10. Aircraft (10) according to any of the preceding claims, wherein
the aircraft (10) is an electric vertical take-off and landing aircraft (10).

## Patentansprüche

1. Luftfahrzeug (10) des elektrisch angetriebenen Typs, umfassend einen Rumpf (12), wenigstens ein Paar von Flügeln (14, 16) und ein Batteriesystem zum Bereitstellen von Leistung für einen Antrieb und für elektrische Systeme des Luftfahrzeugs (10), wobei
- das Batteriesystem wenigstens einen Batteriepack (24) umfasst,
- jeder Batteriepack (24) eine Anzahl individueller Batteriemodule (26) umfasst, welche direkt oder indirekt miteinander gekoppelt sind, und
- das Luftfahrzeug einen innerhalb des Rumpfs (12) gebildeten inneren Raum (18) zum Unterbringen wenigstens einer Person umfasst,
**dadurch gekennzeichnet, dass**
- der wenigstens eine Batteriepack (24) zwischen einer inneren Strukturwand (20), welche den inneren Raum (18) des Rumpfs (12) definiert und umschließt, und einer äußeren Verkleidungswand (22) des Rumpfs (12) angeordnet ist,
wobei die äußere Verkleidungswand (22) den Rumpf (12) umschließt.

2. Luftfahrzeug (10) nach Anspruch 1, wobei
das Batteriesystem wenigstens zwei Batteriepacks (24) umfasst und wobei
in Bezug auf eine longitudinale Achse (L) des Luftfahrzeugs (10) an jeder Seite des Rumpfs (12) wenigstens einer der Batteriepacks (24) zwischen der inneren Strukturwand (20) des Rumpfs (12) und der äußeren Verkleidungswand (22) des Rumpfs (12) angeordnet ist.

3. Luftfahrzeug (10) nach Anspruch 1 oder Anspruch 2, wobei
das Batteriesystem eine Mehrzahl von Batteriepacks (24) umfasst, wobei die Mehrzahl von Batteriepacks (24) in zwei Gruppen von Batteriepacks (24l, 24r) unterteilt ist und wobei
in Bezug auf eine longitudinale Achse (L) des Luftfahrzeugs (10) an jeder Seite des Rumpfs (12) eine der zwei Gruppen von Batteriepacks (24l, 24r) zwischen der inneren Strukturwand (20) des Rumpfs (12) und der äußeren Verkleidungswand (22) des Rumpfs (12) angeordnet ist.

4. Luftfahrzeug (10) nach einem der vorhergehenden Ansprüche, wobei der Rumpf (12) mit einem Schienenmontagemechanismus (40) bereitgestellt ist, welcher eine Anzahl von Montagehalterungen (42) umfasst, welche jeweils vorgesehen sind, um eines der Batteriemodule (26) austauschbar an dem Luftfahrzeug (10) zu montieren.

5. Luftfahrzeug (10) nach Anspruch 4, wobei
- das Batteriesystem ferner ein Thermomanagementsystem umfasst, welches ein Wärmeübertragungsfluid durch die Batteriemodule (26) zirkuliert,
- wenigstens einige, vorzugsweise alle Batteriemodule (26) ein Fluideinlassverbindungsstück (34) und ein Fluidauslassverbindungsstück (36) umfassen, welche mit einem internen Kanalsystem des entsprechenden Batteriemoduls (26) für Wärmeübertragungsfluid innerhalb des entsprechenden Batteriemoduls (26) verbunden sind und dazu eingerichtet sind, mit dem Thermomanagementsystem verbunden zu sein, und
- wenigstens einige, vorzugsweise alle Montagehalterungen (42) Gegenverbindungsstücke (44, 46) für den Fluideinlass bzw. -auslass (34, 36) des entsprechenden Batteriemoduls (26) umfassen.

6. Luftfahrzeug (10) nach einem der vorhergehenden Ansprüche, wobei jeder der Batteriepacks (24) ein virtueller Batteriepack (24) ist, welcher durch ein elektrisches Verbinden einer vorbestimmten Anzahl der Batteriemodule (26) erhalten wird.

7. Luftfahrzeug (10) nach einem der vorhergehenden Ansprüche, wobei
die Batteriemodule (26) jedes der Batteriepacks (24) elektrisch in Reihe verbunden sind, insbesondere durch in Richtung eines Äußeren des Luftfahrzeugs (10) weisende Sammelschienen.

8. Luftfahrzeug (10) nach einem der vorhergehenden Ansprüche, wobei
jedes der Batteriemodule (26) an einer bestimmten Montageposition individuell an dem Rumpf (12) des Luftfahrzeugs (10) gesichert ist.

9. Luftfahrzeug (10) nach Anspruch 8, wobei
der Rumpf (12) mit einer Anzahl der Montagepositionen bereitgestellt ist, welche jeweils vorgesehen sind, um eines der Batteriemodule (26) untereinander austauschbar zu halten, wobei die Anzahl von Montagepositionen größer ist als die Anzahl von Batteriemodulen (26), so dass in einem montierten Zustand aller Batteriemodule (26) wenigstens eine der Montagepositionen frei bleibt.

10. Luftfahrzeug (10) nach einem der vorhergehenden Ansprüche, wobei
das Luftfahrzeug (10) ein elektrisches senkrecht startendes und landendes Luftfahrzeug (10) ist.

## Revendications

1. Aéronef (10) du type à propulsion électrique, comprenant un fuselage (12), au moins une paire d'ailes (14, 16) et un système de batterie pour fournir la puissance pour la propulsion et aux systèmes électriques de l'aéronef (10), dans lequel :
le système de batterie comprend au moins un bloc-batterie (24),
chaque bloc-batterie (24) comprend un certain nombre de modules de batterie (26) individuels, qui sont directement ou indirectement couplés entre eux, et
l' aéronef comprend un espace intérieur (18) formé à l'intérieur du fuselage (12) pour loger au moins une personne,
**caractérisé en ce que** :
l'au moins un bloc-batterie (24) est disposé entre une paroi structurelle interne (20) définissant et entourant l'espace intérieur (18) du fuselage (12) et une paroi de carénage externe (22) du fuselage (12),
dans lequel la paroi de carénage externe (22) entoure le fuselage (12).

2. Aéronef (10) selon la revendication 1, dans lequel :
le système de batterie comprend au moins deux blocs-batteries (24), et dans lequel :
par rapport à un axe longitudinal (L) de l'aéronef (10), de chaque côté du fuselage (12), au moins l'un des blocs-batteries (24) est disposé entre la paroi structurelle interne (20) du fuselage (12) et la paroi de carénage externe (22) du fuselage (12).

3. Aéronef (10) selon la revendication 1 ou la revendication 2, dans lequel :
le système de batterie comprend une pluralité de blocs-batteries (24), ladite pluralité de blocs-batteries (24) étant divisée en deux groupes de blocs-batteries (241, 24r), et dans lequel :
par rapport à un axe longitudinal (L) de l'aéronef (10), de chaque côté du fuselage (12), l'un des deux groupes de blocs-batteries (241, 24r) est disposé entre la paroi structurelle interne (20) du fuselage (12) et la paroi de carénage externe (22) du fuselage (12).

4. Aéronef (10) selon l'une quelconque des revendications précédentes, dans lequel le fuselage (12) est prévu avec un mécanisme de montage à crémaillère (40) comprenant un certain nombre de supports de montage (42), chacun pour monter, de manière échangeable, l'un des modules de batterie (26) sur l'aéronef (10).

5. Aéronef (10) selon la revendication 4, dans lequel :
le système de batterie comprend en outre un système de gestion thermique faisant circuler un fluide de transfert de chaleur dans les modules de batterie (26),
au moins plusieurs, de préférence tous les modules de batterie (26), comprennent un connecteur d'entrée de fluide (34) et un connecteur de sortie de fluide (36) raccordés à un système de canal interne du module de batterie (26) correspondant pour le fluide de transfert de chaleur dans le module de batterie (26) correspondant et adaptés pour être raccordés au système de gestion thermique, et
au moins plusieurs, de préférence tous les supports de montage (42) comprennent des connecteurs complémentaires (44, 46) pour l'entrée et la sortie de fluide (34, 36) du module de batterie (26) correspondant, respectivement.

6. Aéronef (10) selon l'une quelconque des revendications précédentes, dans lequel chacun des blocs-batteries (24) est un bloc-batterie virtuel (24) qui est obtenu en raccordant électriquement un nombre prédéterminé de modules de batterie (26).

7. Aéronef (10) selon l'une quelconque des revendications précédentes, dans lequel :
les modules de batterie (26) de chacun des blocs-batteries (24) sont électriquement raccordés en série, en particulier par des barres omnibus orientées vers un extérieur de l'aéronef (10).

8. Aéronef (10) selon l'une quelconque des revendications précédentes, dans lequel :
chacun des modules de batterie (26) est individuellement fixé au fuselage (12) de l'aéronef (10) dans une certaine position de montage.

9. Aéronef (10) selon la revendication 8, dans lequel :
le fuselage (12) est prévu avec un certain nombre desdites positions de montage, chacune pour maintenir, de manière interchangeable, l'un des modules de batterie (26), le nombre de positions de montage étant supérieur au nombre de modules de batterie (26) de sorte que, dans un état monté de tous les modules de batterie (26), au moins l'une des positions de montage reste vacante.

10. Aéronef (10) selon l'une quelconque des revendications précédentes, dans lequel :
l'aéronef (10) est un aéronef électrique à décollage et atterrissage vertical (10).
